# EUROPEAN PATENT APPLICATION

(11) **EP 4 443 363 A1**
(43) Date of publication of application: **09.10.2024**
(21) Application number: 24154207.5
(22) Date of filing: 26.01.2024
(51) Int. Cl.: G06Q 20/04, G06Q 20/20, G07G 1/14, G07G 5/00

(54) **ELECTRONIC RECEIPT DISPENSING SYSTEM AND METHOD**

(30) Priority: 07.04.2023 JP 2023063022
(71) Applicant: Toshiba TEC Kabushiki Kaisha, Tokyo 141-8562 (JP)
(72) Inventor: Gotou, Seiya, 141-8562 Tokyo (JP)
(74) Representative: Bandpay & Greuter

(57) **Abstract**

According to one embodiment, an electronic receipt dispensing system includes a transaction system server, a database, and a point-of-sale (POS) terminal. The transaction system server stores registered commodity information in the database for a sales transaction at the POS terminal. The transaction system server generates, after a request for a printed receipt, printing data for a transaction receipt for a completed sales transaction based on stored information in the database, then transmits the generated printing data to the POS terminal. After a request for an electronic receipt, the transaction system server generates electronic receipt cooperation data for a transaction receipt for the completed sales transaction based on the stored information in the database, then transmits the electronic receipt cooperation data to an electronic receipt system server.

## Description

### FIELD

Embodiments of the present disclosure relate to an electronic receipt dispensing system and a method.

### BACKGROUND

Electronic receipts may be used instead of paper-medium receipts (paper receipts) in some systems. The electronic receipt can be displayed on a terminal device, and allows transaction content to be checked or reviewed.

In an existing technique, if printing data generated for a retail transaction receipt contains specific characters or the like, an electronic receipt is generated instead of a paper receipt. The specific characters can be inserted into the printing data when a customer is a registered member of an electronic receipt service (an electronic receipt member) or the like.

According to the above-described technique, the timing at which the data for the electronic receipt can be selected to be generated (the time at which the electronic receipt can be selected to be dispensed/issued) is limited to when the printing data is generated. That is, once a receipt dispensing process is already completed, it becomes difficult to dispense an electronic receipt absent a previous request to do so.

In order to eliminate such difficulty as in the above example and make it easier to use an electronic receipt or service providing electronic receipts, there is a demand for a system having improved versatility such as in the degree of freedom in the selection of an electronic receipt dispensing time.

### DISCLOSURE OF INVENTION

To this end, there is provided an electronic receipt dispensing system according to claim 1. Preferred embodiments are set out in the dependent claims. There is also provided a transaction system server for an electronic receipt dispensing system according to claim 8. Preferred embodiments are set out in the dependent claims. There is also provided an electronic receipt dispensing method according to claim 10. Preferred embodiments are set out in the dependent claims.

### BRIEF DESCRIPTION OF THE DRAWINGS

FIG. 1 is a diagram of a receipt system according to an embodiment.
FIG. 2 is a block diagram of a transaction system server.
FIG. 3 is a block diagram of an electronic receipt server.
FIG. 4 is a block diagram of a tablet point-of-sale (POS) terminal.
FIG. 5 is a block diagram showing an example of information stored in a database of a receipt system according to an embodiment.
FIG. 6 depicts an example of HTML data stored in a database of a receipt system according to an embodiment.
FIG. 7 depicts an example of paper receipt printing data stored in a database of a receipt system according to an embodiment.
FIG. 8 depicts an example of a paper receipt printed and dispensed by a printer.
FIG. 9 is a diagram showing an example of electronic receipt cooperation data stored in a database of a receipt system according to an embodiment.
FIG. 10 is a block diagram showing an example of a functional configuration of various control units in a receipt system according to an embodiment.
FIG. 11 is a diagram of a flow of a process executed in a receipt system according to an embodiment.
FIG. 12 is a diagram of a flow of a process executed by a control unit of a tablet POS terminal.
FIG. 13 is a diagram of a flow of a process executed by a control unit of a transaction system server.
FIG. 14 is a diagram of a transaction completion screen displayed by a tablet POS terminal.
FIG. 15 is a diagram showing an example of a balance screen displayed by a tablet POS terminal.

### DETAILED DESCRIPTION

In general, according to certain embodiments, a system and a method having an improved degree of freedom and versatility in the dispensing of an electronic receipt is provide.

According to an embodiment, an electronic receipt dispensing system includes a transaction system server, a database accessible by the transaction system server, and a point-of-sale (POS) terminal communicably connected to the transaction system server. The transaction system server is configured to store registered commodity information in the database for a sales transaction at the POS terminal. The registered commodity information corresponds to a commodity code registered by the POS terminal in the sales transaction. After a request for a printed receipt, the transaction system server generates printing data for a transaction receipt for a completed sales transaction at the POS terminal based on stored information in the database for the sales transaction including the registered commodity information, then transmits the printing data to the POS terminal. After a request for an electronic receipt, the transaction system server generates electronic receipt cooperation data for the transaction receipt for the completed sales transaction at the POS terminal based on the stored information in the database for the sale transaction including the registered commodity information, then transmits the electronic receipt cooperation data to an electronic receipt system server.

### (First Embodiment)

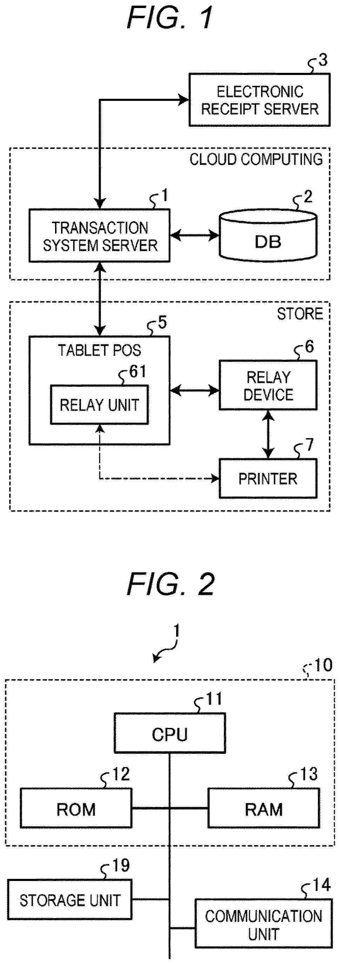

FIG. 1 is a diagram showing an example of a configuration of a receipt system according to a first embodiment. The system includes a transaction system server 1, a database (DB) 2, an electronic receipt server 3, a tablet POS 5 (tablet-based point-of-sale terminal), a relay device 6, a printer 7, and the like.

The tablet POS 5 is a type of a POS terminal that can be provided in a store. The POS terminal is an example of a sales data processing device that processes registration of commodities, settlement of registered commodities, and the like. The term "POS" is an abbreviation for "point of sale." A POS terminal manages information related to the processing of a sales transaction or the like at the time of the transaction.

The store may also have other types of POS terminals other than a tablet POS 5. Other types of POS terminals include, for example, a conventional stationary POS register operated by a store clerk, a self-service-checkout device, and a semi-self-service-checkout device. A self-service-checkout device allows a customer to perform operations related to registration and settlement by himself/herself. A semi-self- service-checkout device allows a customer to perform an operation related to settlement by himself/herself using commodity information registered by a store clerk.

The relay device 6 relays data between the tablet POS 5 and a peripheral device such as the printer 7. For example, the relay device 6 transmits an instruction to dispense a receipt received at the tablet POS 5 to the printer 7.

The tablet POS 5 may itself include a relay unit 61 that functions similarly to the relay device 6. It is possible to selectively use the relay device 6 or the relay unit 61. For example, when it is desired to use a printer 7 by wire connection, the printer 7 (or other peripheral device) can be wire-connected to the relay device 6 and wireless communication performed between the relay device 6 and the tablet POS 5. When the peripheral device such as the printer 7 can itself perform the wireless communication, then the wireless communication can be performed between the peripheral device and the relay unit 61 directly.

The printer 7 dispenses printed matter such as a receipt. The printer 7 in this example incorporates a printing unit and roll paper. The printing unit includes a print head and a platen roller. The platen roller holds the paper drawn from the roll paper between the platen roller and the print head, and conveys the paper by rotating. The print head prints characters, text, logos, and the like on the conveyed paper.

The transaction system server 1 and the DB 2 are interposed between the POS terminal in the store (for example, the tablet POS 5) and the external electronic receipt server 3 and mediate data cooperation between the POS terminal and the electronic receipt server 3. In this example, the transaction system server 1 and the DB 2 are implemented as cloud computing services or the like. The transaction system server 1 can refer to information stored in the DB 2 and also updates the information stored in the DB 2.

The transaction system server 1 receives information about a transaction (transaction information) performed by a POS terminal in the store and stores the information in the DB 2. In response to an instruction received from the POS terminal in the store, HTML data, paper receipt printing data, and electronic receipt cooperation data are generated based on the transaction information. The transaction system server 1 transmits the generated paper receipt printing data to the printer 7 and/or transmits the electronic receipt cooperation data to the electronic receipt server 3.

Upon receiving the electronic receipt cooperation data from the transaction system server 1, the electronic receipt server 3 generates and stores corresponding electronic receipt data. In addition, in response to a reference request from a terminal device used by a customer, the electronic receipt server 3 provides an electronic receipt as requested by the customer to the terminal device used by the customer.

FIG. 2 is a block diagram showing an example of a configuration of the transaction system server 1. The transaction system server 1 includes a central processing unit (CPU) 11, a read only memory (ROM) 12, a random access memory (RAM) 13, a communication unit 14, and a storage unit 19.

The CPU 11 is an example of a processor and controls each unit of the transaction system server 1. The ROM 12 stores various programs. The RAM 13 is a work space in which programs and various data are loaded. The CPU 11, the ROM 12, and the RAM 13 are connected via a bus or the like, and constitute a control unit 10.

The communication unit 14 is a communication interface that communicably connects the control unit 10 to an external device (for example, the tablet POS 5 or the electronic receipt server 3) via a network.

The storage unit 19 includes a storage medium such as a hard disk drive (HDD) or a flash memory, and maintains stored contents even if a power supply is cut off. The storage unit 19 stores programs executable by the CPU 11 and various setting information.

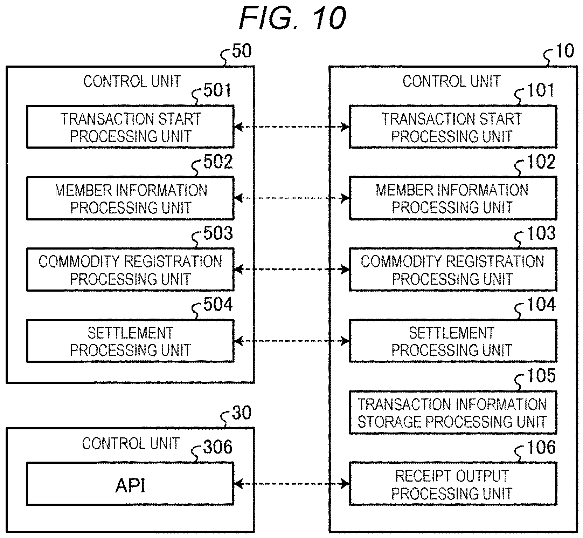

The control unit 10 performs various processes by the CPU 11 executing a program stored in the ROM 12 or the storage unit 19 and loaded in the RAM 13. Accordingly, the control unit 10 provides various functions which may be described as functional units. These various functional units are, for example, a transaction start processing unit 101, a member information processing unit 102, a commodity registration processing unit 103, a settlement processing unit 104, a transaction information storage processing unit 105, and a receipt output processing unit 106 (see FIG. 10).

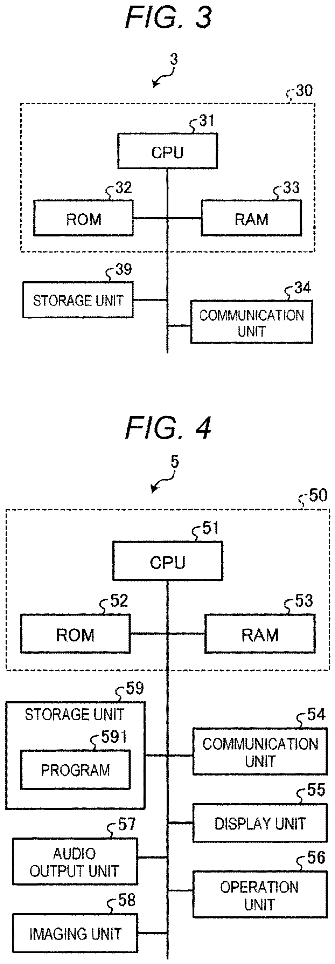

FIG. 3 is a block diagram showing an example of a configuration of the electronic receipt server 3. The electronic receipt server 3 includes a CPU 31, a ROM 32, a RAM 33, a communication unit 34, a storage unit 39, and the like.

The CPU 31 is an example of a processor and controls each unit of the electronic receipt server 3. The ROM 32 stores various programs. The RAM 33 is a work space in which programs and various data are loaded. The CPU 31, the ROM 32, and the RAM 33 are connected via a bus or the like, and constitute a control unit 30.

The communication unit 34 is a communication interface that communicably connects the control unit 30 and an external device (for example, the transaction system server 1) via a network.

The storage unit 39 includes a storage medium, such as a HDD or a flash memory, and maintains stored contents even if the power supply is cut off. The storage unit 39 stores programs executable by the CPU 31 and various setting information.

The control unit 30 executes various processes by the CPU 31 operating according to a program stored in the ROM 32 or the storage unit 39 and loaded in the RAM 33. Accordingly, the control unit 30 can provide an application programming interface (API) 306 (see FIG. 10).

FIG. 4 is a block diagram showing an example of a configuration of the tablet POS 5. Other types of POS terminals in the store may also have a configuration substantially similar to that of the tablet POS 5. The tablet POS 5 includes a CPU 51, a ROM 52, a RAM 53, a communication unit 54, a display unit 55, an operation unit 56, an audio output unit 57, an imaging unit 58, a storage unit 59, and the like.

The CPU 51 is an example of a processor and controls each unit of the tablet POS 5. The ROM 52 stores various programs. The RAM 53 is a work space in which programs and various data are loaded. The CPU 51, the ROM 52, and the RAM 53 are connected via a bus or the like, and constitute a control unit 50.

The communication unit 54 is a communication interface that communicably connects the control unit 50 and an external device (for example, the relay device 6 or the electronic receipt server 3) via a network.

The display unit 55 includes a display device such as a liquid crystal display (LCD), and displays various information under control of the CPU 51.

The operation unit 56 includes an input device such as a touch panel provided to overlap a surface of the display unit 55, and outputs operation contents input by a user or operator through the input device to the CPU 51. The input device for a POS terminal may be a keyboard, a pointing device, or the like.

The audio output unit 57 includes a speaker and a buzzer, and outputs an audio (sound) under control of the CPU 51.

The imaging unit 58 includes an imaging element such as a charge coupled device (CCD) or a complementary MOS (CMOS) imaging device. The imaging unit 58 is used to image a code symbol such as a bar code or a two-dimensional code attached to a commodity. In other words, the imaging unit 58 can be used to acquire a code symbol (such as a bar code or a two-dimensional code) from an image of a commodity. The imaging unit 58 is a type of input device. The code symbol acquired by the imaging unit 58 is decoded into code information.

The storage unit 59 includes a storage medium such as a solid-state drive (SSD) or a flash memory, and maintains stored contents even if the power supply is cut off. The storage unit 59 stores programs executable by the CPU 51 and various setting information.

The control unit 50 performs various processes by the CPU 51 executing a program stored in the ROM 52 or the storage unit 59 and loaded in the RAM 53. Accordingly, the control unit 50 provides various functions, which may be described as functional units. The various functional units are, for example, a transaction start processing unit 501, a member information processing unit 502, a commodity registration processing unit 503, and a settlement processing unit 504 (see FIG. 10).

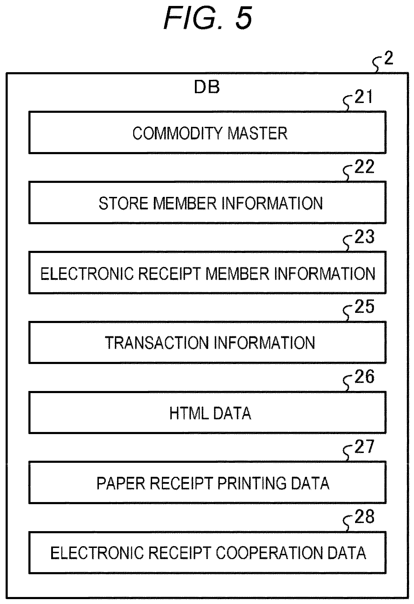

FIG. 5 is a block diagram showing an example of information stored in the DB 2. The DB 2 stores various information referred to or updated by the transaction system server 1. The information stored in the DB 2 includes, in this example, a commodity master 21, store member information 22, electronic receipt member information 23, transaction information 25, HTML data 26, paper receipt printing data 27, and electronic receipt cooperation data 28.

The commodity master 21 provides information on the commodities handled (sold) by the store. The commodity master 21 stores, for example, a commodity name and a unit price in correlation with a commodity code. The commodity code is an example of information capable of identifying a commodity. In this example, the commodity code is a Japanese Article Number (JAN) code.

The store member information 22 and the electronic receipt member information 23 are stored in the DB 2 in a table format or the like.

The store member information 22 stores member information about each store member (e.g., a name, a contact address, and the like) in correlation with a store member code. The store member code is a unique code in the store member information 22. The store member code is an example of information capable of identifying the store member. In this context, a store member is a person who has registered to participate in a store loyalty program or the like.

The electronic receipt member information 23 stores member information about each electronic receipt member (e.g., a name, a contact address, and the like) in correlation with a receipt member code. The receipt member code is a unique code in the electronic receipt member information 23. The receipt member code is an example of information capable of identifying the electronic receipt member. In this context, an electronic receipt member is a person who has registered to participate in an electronic receipt service including one or more stores or the like.

The transaction information 25 is text data stored in the DB 2 by the transaction system server 1. A file format of the transaction information 25 according to the embodiment is a JSON format (JavaScript obj ect notation). The transaction information 25 includes, for example, header information, footer information, and commodity information. The commodity information in this context includes a commodity code, a commodity name, a unit price, the number purchased, and the like, related to items purchased in a sales transaction or the like. The commodity information is positioned between the header information and the footer information. The header information and/or the footer information includes a transaction ID. The transaction ID is an example of information capable of identifying a specific transaction.

The HTML data 26 is an example of structured data. The HTML data 26 is information generated by the control unit 10 of the transaction system server 1 performing editing (conversion) such as adding an HTML tag to the transaction information 25 in the JSON format and stored in the DB 2. The paper receipt printing data 27 and the electronic receipt cooperation data 28 are generated (converted) by further editing the HTML data 26.

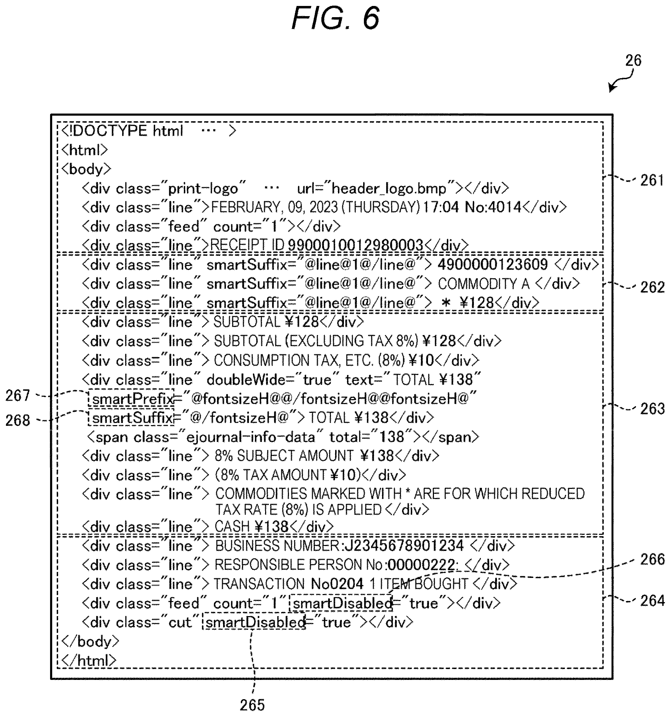

FIG. 6 is a diagram showing an example of HTML data 26 stored in the DB 2. The HTML data 26 includes header information 261, commodity information 262, payment information 263, and footer information 264.

The header information 261 is obtained by adding an HTML tag to the header information in the transaction information 25. The footer information 264 is obtained by adding an HTML tag to the footer information in the transaction information 25. The commodity information 262 is obtained by adding an HTML tag to the commodity information in the transaction information 25.
In FIG. 6, one piece of the commodity information 262 (for "COMMODITY A") is shown because there was only one commodity purchased in the transaction. When a plurality of commodities are purchased in a transaction, the commodity information 262 repeats for each item purchased. The payment information 263 includes various amounts (subtotals and totals) and tax rates used calculating such transaction totals and the like based on the commodity information in the transaction information 25. The payment information 263 may also include various notes or notations related the transaction settlement, and the like.

Information used for the paper receipt printing data 27 and information used for the electronic receipt cooperation data 28 are both included in the HTML data 26 with HTML tags. For example, "smartDisabled" attributes 265 and 266 of a "<div>" tag are used to indicate that the electronic receipt cooperation data 28 is unnecessary information. In addition, a "smartPrefix" attribute 267 of the "<div>" tag is designated when adding necessary information to the electronic receipt cooperation data 28 at the beginning of a portion surrounded by the tag. Further, a "smartSuffix" attribute 268 of the "<div>" tag is designated when adding necessary information to the electronic receipt cooperation data 28 at the end of a portion surrounded by the tag.

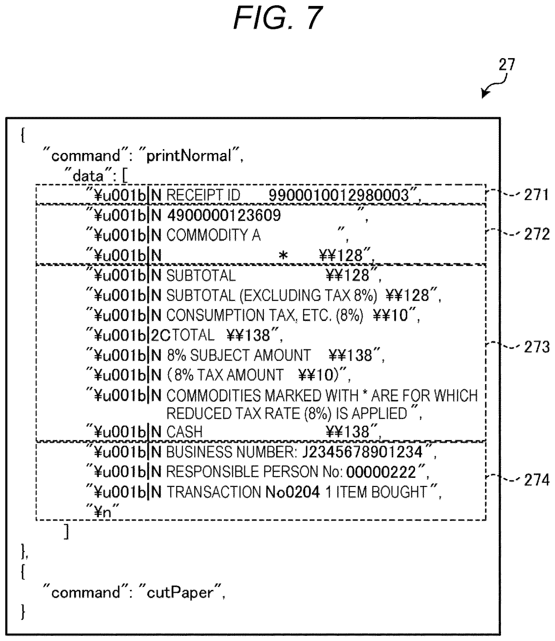

FIG. 7 is a diagram showing an example of the paper receipt printing data 27 stored in the DB 2. The paper receipt printing data 27 can be generated by editing the HTML data 26. The paper receipt printing data 27 is data that can be used by the printer 7 to print a paper receipt.

The paper receipt printing data 27 includes header information 271, commodity information 272, payment information 273, and footer information 274. Contents of the header information 271, the commodity information 272, the payment information 273, and the footer information 274 substantially correspond to the header information 261, the commodity information 262, the payment information 263, and the footer information 264 included in the HTML data 26.

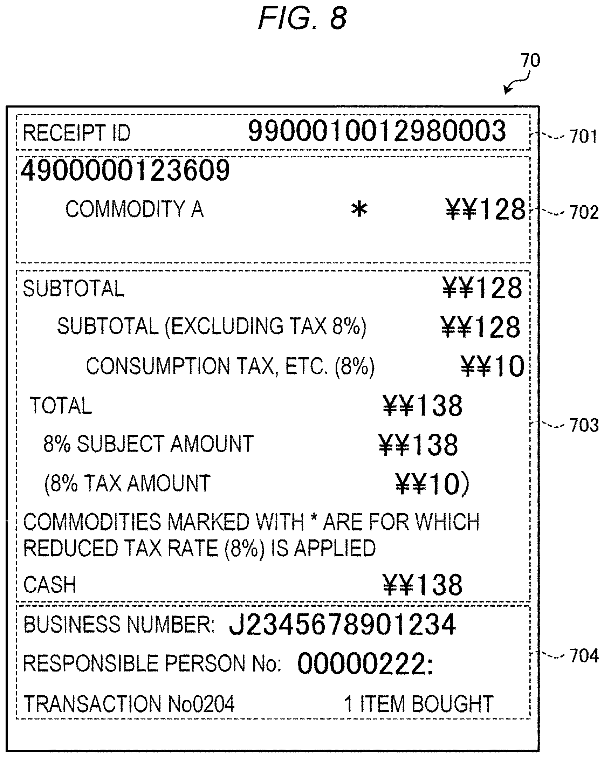

The paper receipt output by the printer 7 based on the paper receipt printing data 27 is, for example, as shown in FIG. 8. FIG. 8 is a diagram showing an example of a display content 70 of a paper receipt printed and output by the printer 7. In FIG. 8, a store logo image and the like that would typically be displayed in a header portion of a paper receipt are omitted, but such matter may be added or included in other examples.

The display content 70 of the paper receipt includes header information 701, commodity information 702, payment information 703, and footer information 704. Contents of the header information 701, the commodity information 702, the payment information 703, and the footer information 704 correspond to the header information 271, the commodity information 272, the payment information 273, and the footer information 274.

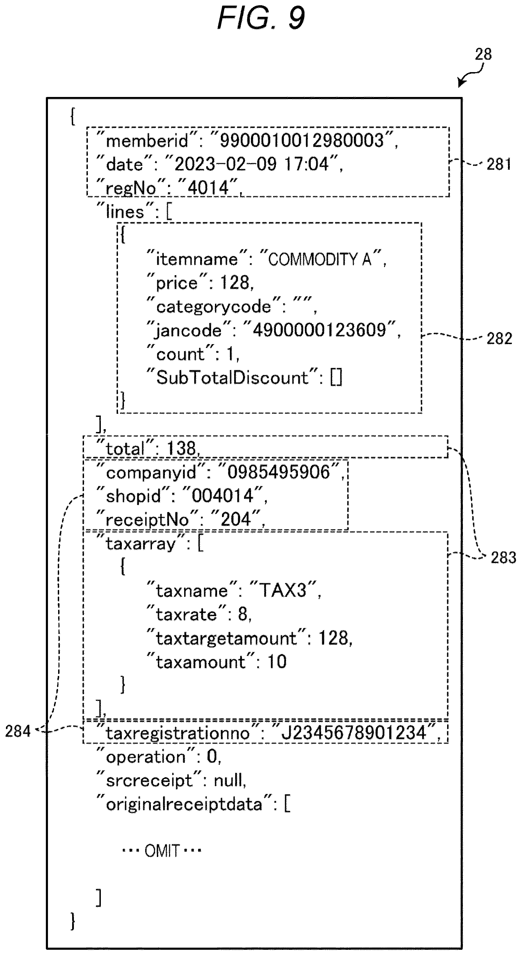

FIG. 9 is a diagram showing an example of the electronic receipt cooperation data 28 stored in the DB 2. The electronic receipt cooperation data 28 can be generated by editing the HTML data 26. The electronic receipt cooperation data 28 is data transmitted to the electronic receipt server 3 and used by the electronic receipt server 3 to generate an electronic receipt data.

The electronic receipt cooperation data 28 includes header information 281, commodity information 282, payment information 283, and footer information 284. Contents of the header information 281, the commodity information 282, the payment information 283, and the footer information 284 substantially correspond to the header information 271, the commodity information 272, the payment information 273, and the footer information 274 included in the paper receipt printing data 27. A display order of the pieces of information 281 to 284 can be matched to a database structure constructed in the electronic receipt server 3.

Upon receiving the electronic receipt cooperation data 28, the electronic receipt server 3 generates new electronic receipt data based on the electronic receipt cooperation data 28. In this context, generating electronic receipt data means newly registering the electronic receipt data in the electronic receipt server 3. The electronic receipt data is data for enabling the customer to refer to the electronic receipt from a terminal device. In other words, the electronic receipt data is for enabling a terminal device used by the customer to display the electronic receipt of a transaction.

FIG. 10 is a block diagram showing an example of a functional configuration of the control units 10, 30, and 50. The control unit 50 of the tablet POS 5 includes the transaction start processing unit 501, the member information processing unit 502, the commodity registration processing unit 503, and the settlement processing unit 504. The control unit 10 of the transaction system server 1 includes the transaction start processing unit 101, the member information processing unit 102, the commodity registration processing unit 103, the settlement processing unit 104, the transaction information storage processing unit 105, and the receipt output processing unit 106. The control unit 30 of the electronic receipt server 3 includes the API 306 for generating the electronic receipt data.

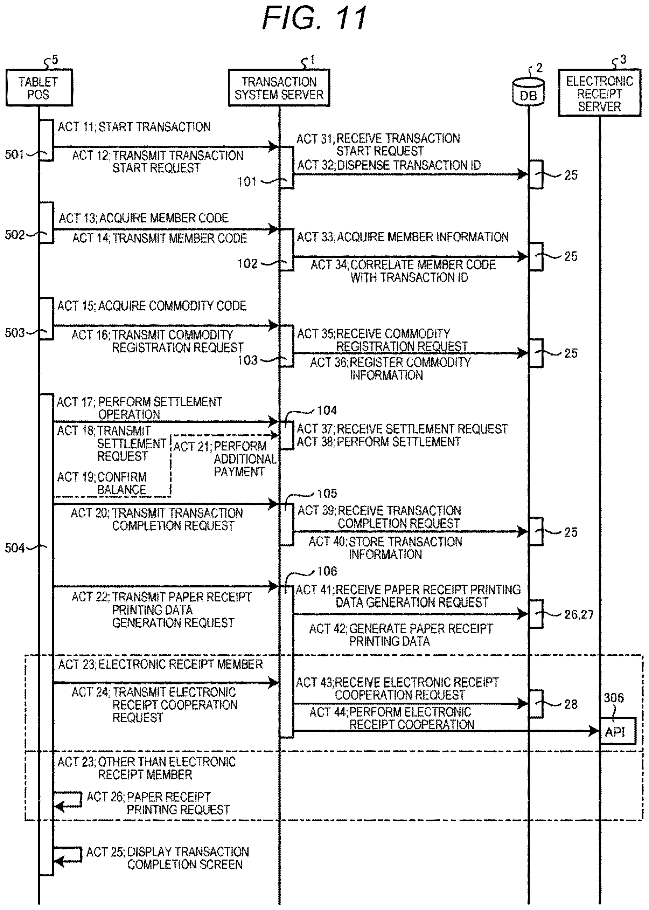

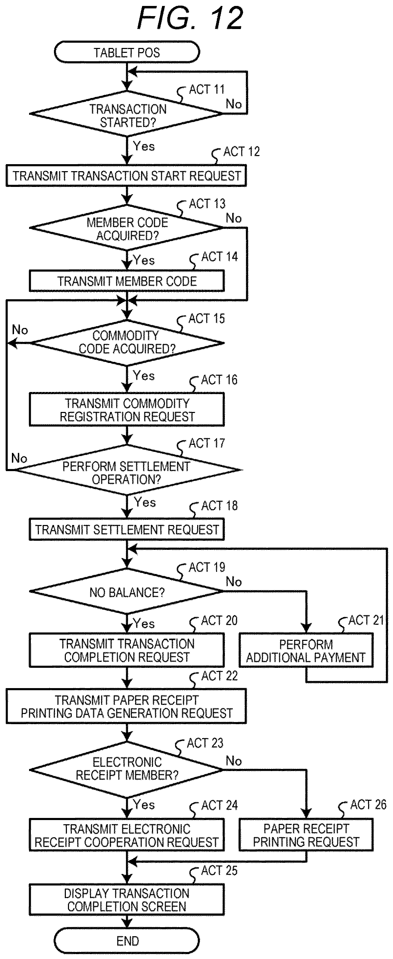

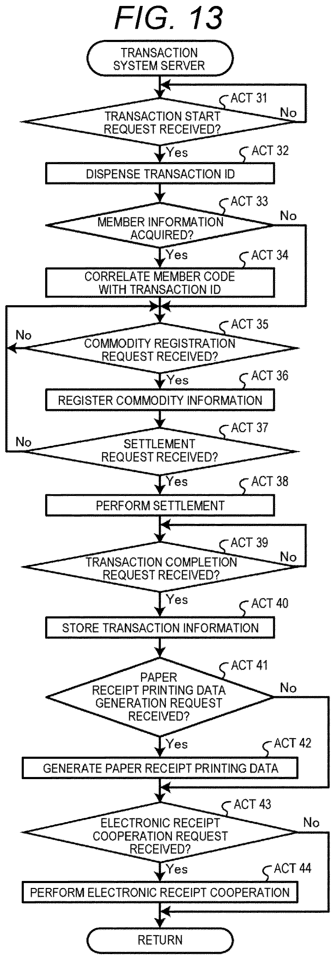

FIG. 11 is a diagram showing an example of a flow of a process collectively executed by the control units 10, 30, and 50 in the receipt system of an embodiment. The ACT numbers shown in FIG. 11 corresponds to the same ACT numbers shown in FIGS. 12 and 13.

The transaction start processing unit 101, the member information processing unit 102, the commodity registration processing unit 103, and the settlement processing unit 104 included in the transaction system server 1 operate corresponding to operations of the transaction start processing unit 501, the member information processing unit 502, the commodity registration processing unit 503, and the settlement processing unit 504.

That is, the transaction start processing unit 101 and the transaction start processing unit 501 cooperate to perform a transaction start process (ACT11, ACT12, ACT31, and ACT32). A transaction ID is dispensed in the transaction start process.

Similarly, the member information processing unit 102 and the member information processing unit 502 cooperate to perform a member information process (ACT13, ACT14, ACT33, and ACT34). The member information process operates upon acquisition of a member code (a store member code or receipt member code). In the member information process, the member code is correlated to the transaction ID, and acquisition of member information correlated with a store member code or member information correlated with a receipt member code are performed.

The commodity registration processing unit 103 and the commodity registration processing unit 503 cooperate to perform a commodity registration process (ACT15, ACT16, ACT35, and ACT36). The commodity registration process is a process of collecting the registered commodity information and editing the transaction information 25. Specifically, the commodity registration processing unit 503 receives an input of the commodity code through the operation unit 56 or the imaging unit 58, and the commodity registration processing unit 103 acquires the commodity information (e.g., the commodity name, the unit price, or the like) correlated with the commodity code and registers the commodity code and the commodity information in the transaction information 25.

Further, the settlement processing unit 104 and the settlement processing unit 504 cooperate to perform a settlement process according to the transaction information 25 (ACT17, ACT18, ACT37, and ACT38). In the settlement process, payment for a purchased commodity is made by cash settlement, credit settlement, electronic money settlement, or the like.

The settlement processing unit 504 requests the receipt output processing unit 106, serving as a printing data generation unit, to generate the paper receipt printing data 27 (ACT22).

When the member code of the electronic receipt member (receipt member code) is acquired during the transaction, the settlement processing unit 504 requests the receipt output processing unit 106, serving as an electronic receipt generation unit, to generate the electronic receipt cooperation data 28 (ACT23 and ACT24).

The receipt output processing unit 106 operates in response to end of the settlement process, and functions as an example of the printing data generation unit or a part of the electronic receipt generation unit.

The receipt output processing unit 106, serving as the printing data generation unit, generates the paper receipt printing data 27 corresponding to the transaction information 25 (ACT41 and ACT42).

The receipt output processing unit 106, as a part of the electronic receipt generation unit, generates the electronic receipt cooperation data 28 corresponding to the transaction information 25, and transmits the generated data to the API 306 (ACT43 and ACT44).

The API 306 of the electronic receipt server 3, in cooperation with the receipt output processing unit 106, constitutes the electronic receipt generation unit, and generates data for displaying an electronic receipt on a terminal device (the electronic receipt data) from or based on the electronic receipt cooperation data 28.

The transaction information storage processing unit 105 operates in response to the end of the settlement process (ACT19 to ACT21) and generates or updates the settlement and transaction information stored in the DB 2 (ACT39 and ACT40).

FIG. 12 is a diagram showing an example of a flow of the process executed by the control unit 50 of the tablet POS 5. The ACT numbers shown in FIG. 12 corresponds to the processes with the same ACT numbers shown in FIG. 11.

When the operation unit 56 receives an instruction for a transaction start (ACT11; Yes), the control unit 50 (the transaction start processing unit 501) transmits a signal corresponding to a transaction start request to the transaction system server 1 (ACT12).

Next, if a member code is input by acquisition of the code symbol by the imaging unit 58 or reception of an input operation with the operation unit 56 (ACT13; Yes), the control unit 50 (the member information processing unit 502) transmits the member code to the transaction system server 1 (ACT14). Here, if a member code is not acquired (ACT13; No), the control unit 50 skips ACT14 and advances the process to ACT15.

For convenience of description, in the present example, the member code is acquired and transmitted in ACT13 and ACT14, but in other examples, the member code may be acquired at any time from the instruction for a transaction start to an instruction to start a settlement operation (ACT17; Yes). The member information process in this example handles both or either the member information of store members or electronic receipt members.

Next, the control unit 50 (the commodity registration processing unit 503) waits (ACT15; No) for an input of a commodity code. If the commodity code is input through the operation unit 56 or the imaging unit 58 (ACT15; Yes), the control unit 50 transmits a commodity registration request to the transaction system server 1 (ACT16). In the commodity registration request, the acquired commodity code is transmitted to the transaction system server 1.

The control unit 50 receives the commodity registrations (ACT15 and ACT16) until (ACT17; No) the settlement operation is instructed (ACT17; Yes). If the operation unit 56 receives an instruction for the settlement operation (ACT17; Yes), the control unit 50 (the settlement processing unit 504) transmits a signal corresponding to a settlement request to the transaction system server 1 (ACT18).

Next, the control unit 50 (the settlement processing unit 504) performs a balance confirmation (ACT19). As a result of the settlement process, if payment for the entire price of the items to be purchased is completed and there is no balance (ACT19; Yes), the control unit 50 (the settlement processing unit 504) transmits a signal corresponding to a transaction completion request to the transaction system server 1 (ACT20).

In ACT19, if there is still a balance (the payment is not completed) (ACT19; No), the control unit 50 performs an additional payment process (ACT21) and returns the process to ACT19. The additional payment may be required when, for example, a charge-type electronic money is used for payment, but the available amount is insufficient, and thus an additional payment by cash or the like is required.

The control unit 50 (the settlement processing unit 504) then transmits a signal corresponding to a paper receipt printing data generation request to the transaction system server 1 (ACT22).

The control unit 50 (the settlement processing unit 504) also determines whether the customer is an electronic receipt member (ACT23). That is, it is determined whether the member code of an electronic receipt member (receipt member code) was acquired before the settlement operation started.

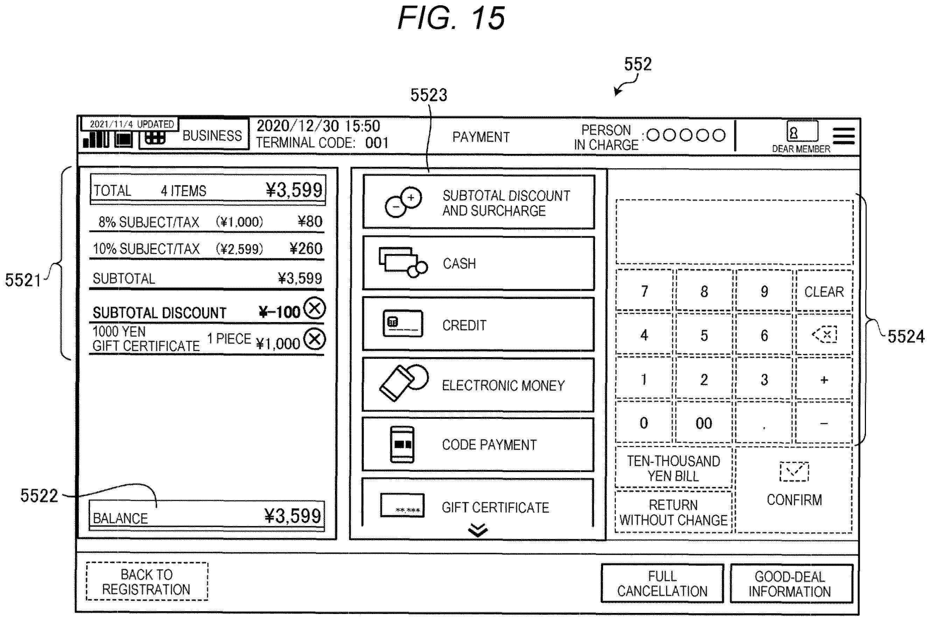

If the customer is an electronic receipt member (ACT23; Yes), the control unit 50 (the settlement processing unit 504) transmits a signal corresponding to an electronic receipt cooperation request to the transaction system server 1 (ACT24), and displays a transaction completion screen (FIG. 15) (ACT25).

If the customer is not an electronic receipt member (ACT23; No), the control unit 50 (the settlement processing unit 504) performs a paper receipt printing request process for the printer 7 (ACT26), and displays the transaction completion screen (FIG. 15) (ACT25). In the paper receipt printing request process, the paper receipt printing data 27 received in response to the request made in ACT22 is transmitted to the printer 7.

FIG. 13 is a diagram showing an example of a flow of a process executed by the control unit 10 of the transaction system server 1. The ACT numbers shown in FIG. 13 corresponds to the processes with the same ACT numbers shown in FIG. 11.

When a transaction start request is received from the tablet POS 5 (ACT31; Yes), the control unit 10 (the transaction start processing unit 101) dispenses a transaction ID, transmits the transaction ID to the tablet POS 5, generates the transaction information 25 for the transaction ID, and stores the transaction information 25 in the DB 2 (ACT32).

Next, if a member code is received from the tablet POS 5, the control unit 10 (the member information processing unit 102) acquires the member information (ACT33; Yes), and correlates the member code with the transaction ID (ACT34). A description of the member code can be included in the transaction information 25 (JSON format) for the transaction ID. If the member code is not received (ACT33; No), the control unit 50 skips ACT34 and advances the process to ACT35.

For convenience of description, the member information is described as acquired in ACT33 and ACT34, but actually, the member information may be acquired at any time from the transaction start to the start of the settlement operation (ACT37; Yes). The member information process handles both or either the member information of store members or the electronic receipt members.

Next, the control unit 10 (the commodity registration processing unit 103) waits (ACT35; No) for reception of a commodity registration request. If the commodity registration request is received (ACT35; Yes), the control unit 10 acquires the commodity information matching the commodity code included in the commodity registration request from the commodity master 21 of the DB 2, and includes (registers) the commodity information in the transaction information 25 (ACT36).

The control unit 10 receives commodity registrations (ACT35 to ACT36) until (ACT37; No) a settlement request is received . When the settlement request is received (ACT37; Yes), the control unit 10 (the settlement processing unit 104) performs the settlement process (ACT38).

Next, the control unit 10 (the transaction information storage processing unit 105) waits (ACT39; No) for reception of a transaction completion request, and once the transaction completion request is received (ACT39; Yes), the editing of the transaction information 25 is ended and the transaction information 25 is stored (ACT40).

Subsequently, if the control unit 10 (the receipt output processing unit 106) receives the signal corresponding to a paper receipt printing data generation request (ACT41; Yes), the control unit 10 generates the HTML data 26 in which the transaction information 25 in the JSON format is structured, generates the paper receipt printing data 27 by editing the HTML data 26, and transmits the paper receipt printing data 27 to the tablet POS 5 (ACT42). If the paper receipt printing data generation request is not received (ACT41; No), the control unit 10 (the receipt output processing unit 106) skips ACT42 and advances the process to ACT43.

If a signal corresponding to the electronic receipt cooperation request is received (ACT43; Yes), the control unit 10 (the receipt output processing unit 106) performs an electronic receipt cooperation process (ACT44). In the electronic receipt cooperation process, the control unit 10 (the receipt output processing unit 106) edits the HTML data 26 to generate electronic receipt cooperation data 28, and transmits the electronic receipt cooperation data 28 to the electronic receipt server 3.

If the electronic receipt cooperation request is not received (ACT43; No), the control unit 10 (the receipt output processing unit 106) skips ACT44, ends the process, and returns the process to ACT31.

When the electronic receipt server 3 receives the electronic receipt cooperation data 28, the API 306 for generating electronic receipt data operates with the electronic receipt cooperation data 28. The API 306 generates the electronic receipt data by using the electronic receipt cooperation data 28. That is, the API 306 newly generates data for displaying an electronic receipt of the current transaction on a terminal device.

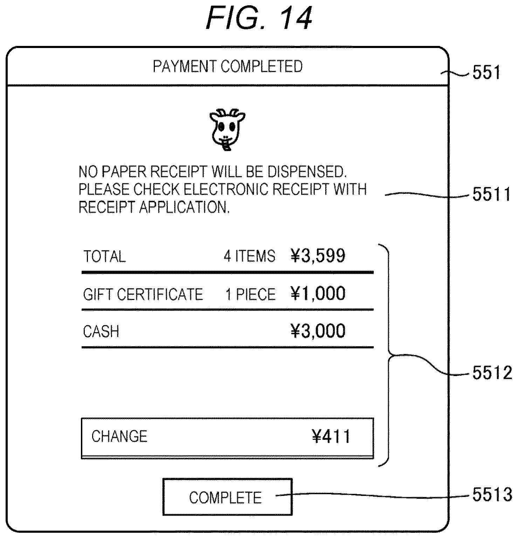

FIG. 14 is a diagram showing an example of a transaction completion screen displayed by the tablet POS 5. The control unit 50 of the tablet POS 5 displays a transaction completion screen 551 on the display unit 55 in ACT25. The transaction completion screen 551 includes, for example, a message 5511, payment details 5512, and an operator 5513.

The message 5511 when the customer is an electronic receipt member (processing via ACT24 after ACT23) is, for example, "No paper receipt will be dispensed. Please check electronic receipt with receipt application." The message 5511 when the customer is not an electronic receipt member (processing via ACT26 after ACT23) is, for example, "Paper receipt is dispensed."

The payment details 5512 are contents according to settlement contents. The operator 5513 (button) receives an operation for closing the transaction completion screen 551. If the operator 5513 is pressed or otherwise selected, the transaction completion screen 551 is closed, and the display of the display unit 55 transitions to a screen that receives the start of a new transaction (the next transaction).

FIG. 15 is a diagram showing an example of a balance screen displayed by the tablet POS 5. The control unit 50 of the tablet POS 5 displays a balance screen 552 on the display unit 55 during ACT18 and ACT21. The balance screen 552 may be displayed during the settlement process for receiving operations for paying a price of goods in the transaction.

The balance screen 552 includes payment details 5521, a balance 5522, and operator regions 5523 and 5524 (buttons). The payment details 5521 include a total price of purchased commodities, a tax amount for each tax rate, a discount price, and the like. The balance 5522 displays an amount to be paid. The operator region 5523 receives a selection of payment methods. The payment method can be, for example, cash, credit settlement, electronic money settlement, code settlement, or gift certificate. The operator region 5524 receives an input of a numerical value or the like, and receives an input of an amount to be paid by the payment method selected by the operator 5523. The operator region 5524 shown in FIG. 15 is depicted in an inoperable state (e.g., "grayed out"). If any one of the buttons in operator region 5523 is selected, the operator region 5524 enters an operable state.

With such a system, it is possible to generate electronic receipt data for displaying an electronic receipt according to a process performed by a POS terminal such as the tablet POS 5. A paper receipt can also be dispensed as necessary. That is, when the electronic receipt data will be generated, it is possible not to dispense any paper receipt.

In addition, since the API 306 for generating the electronic receipt data is provided outside the flow of processes specifically associated with handling of the transaction as in the system, the process related to generation of the electronic receipt can be individually maintained separately from the process related to the transaction processing.

In an embodiment, the transaction system server 1 and the electronic receipt server 3 are separated from each other. In some examples, the transaction system server 1 and the electronic receipt server 3 may be implemented on the same server.

In practice, the transaction system server 1 may be implemented as a plurality of servers. That is, various functional units included in the transaction system server 1 in the embodiment may be divided into or distributed among a plurality of servers.

In some examples, the DB 2 may be included in the transaction system server 1. Alternatively, some or all of the commodity master 21, the store member information 22, the electronic receipt member information 23, the transaction information 25, the HTML data 26, the paper receipt printing data 27, and the electronic receipt cooperation data 28 described as stored in the DB 2 in the above embodiment may be stored in the storage unit 19 of the transaction system server 1.

In addition, various functional units described in an example as included in the transaction system server 1 may be provided in the tablet POS 5 or the like instead.

### (Second Embodiment)

In an example embodiment, a function of dispensing an electronic receipt after a prior completion of a transaction will be described.

In the following example, it is assumed that a customer who visits the store requests the dispensing of an electronic receipt for a transaction by indicating a transaction ID of a completed transaction. In this case, a store clerk operates the tablet POS 5 to dispense the electronic receipt for an already completed transaction.

Here, a case in which a tablet POS 5 on a sales floor or at a service counter receives operations of a store clerk will be described as an example. In other examples, the tablet POS 5 may be another POS terminal type or a store attendant terminal or the like for provided in a backroom of the store.

The control unit 50 of the tablet POS 5 includes an electronic receipt member identification unit, a transaction identification unit, and a post-dispensing request unit. The control unit 10 of the transaction system server 1 includes a transaction acquisition unit and a post-dispensing processing unit. The post-dispensing processing unit constitutes an example of an electronic receipt generation unit together with the API 306.

The transaction acquisition unit (the control unit 10) acquires the specific transaction information 25 from the DB 2 for a completed transaction. The post-dispensing request unit (the control unit 50) requests the electronic receipt generation unit (including the post-dispensing processing unit (the control unit 10) and the API 306) to generate electronic receipt data corresponding to the transaction information 25 acquired by the transaction acquisition unit (the control unit 10).

The electronic receipt member identification unit (the control unit 50) operates when an electronic receipt cooperation process is selected from a business menu, and receives an input of the receipt member code corresponding to the electronic receipt member. The customer provides the receipt member code to the store clerk through a display screen of a customer terminal or the like.

The transaction identification unit (the control unit 50) receives an input of the transaction ID promoted by the customer.

The post-dispensing request unit (the control unit 50) transmits a signal (a dispensing request) for requesting the dispensing of the electronic receipt to the transaction system server 1 with the relevant transaction ID attached thereto.

Upon receiving the dispensing request, the transaction acquisition unit (the control unit 10) acquires the transaction information 25 matching the transaction ID from the DB 2.

The post-dispensing processing unit (the control unit 10) generates the HTML data 26 based on the transaction information 25 in a JSON format, and then edits the HTML data 26 as necessary to generate the electronic receipt cooperation data 28. Then, the post-dispensing processing unit (the control unit 10) transmits the electronic receipt cooperation data 28 to the electronic receipt server 3.

Processes in the electronic receipt server 3 are the same as that in the first embodiment. When the electronic receipt server 3 receives the electronic receipt cooperation data 28, the API 306 for generating electronic receipt data operates. The API 306 generates the electronic receipt data based on the electronic receipt cooperation data 28. That is, the API 306 newly generates data for displaying the electronic receipt of the current transaction on the terminal device.

As described above, when an electronic receipt member cannot provide the appropriate member information during the transaction, the electronic receipt data can still be generated after the transaction once the receipt member code is provided. In addition, for the transaction information 25 for transactions completed before the customer became an electronic receipt member, it is possible to make electronic receipts by providing, for example, a paper receipt (with a transaction ID) from a previous transaction after the customer becomes an electronic receipt member. Alternatively, if a customer who is the store member becomes an electronic receipt member, the transaction information 25 correlated with the store member code can be extracted from the DB 2, and the electronic receipt data can now be generated based on the transaction information 25 associated with the store member code.

If the HTML data 26 matching the transaction ID remains in the DB 2, the control unit 10 of the transaction system server 1 may use the HTML data 26 without acquiring the transaction information 25 again.

The program executed by each device according to the embodiments described above can be provided by being incorporated in advance in the ROM or the like. The program executed by each device according to the embodiments described above may be provided by being recorded in a non-transitory, computer-readable recording medium such as a CD-ROM, a flexible disk (FD), a CD-R, or a digital versatile disk (DVD) as a file having an installable format or an executable format.

Further, the program executed by each device according to embodiments described above may be stored in a computer connected to a network such as the Internet, and provided by being downloaded via the network. Further, the program executed by each device according to the embodiments described above may be provided, accessed, or distributed via the network such as the Internet.

Although several embodiments are described, these embodiments are presented as examples and are not intended to limit the scope of the disclosure. These novel embodiments can be executed in various other forms, and various omissions, substitutions, changes, and combinations can be made within a scope not departing from the disclosure. The embodiments and the modification thereof are in the scope of the disclosure and are also in the disclosure described in the scope of claims.

## Claims

1. An electronic receipt dispensing system, comprising:
a transaction system server (1);
a database (2) accessible by the transaction system server; and
a point-of-sale (POS) terminal communicably connected to the transaction system server, wherein
the transaction system server is configured to:
store registered commodity information in the database for a sales transaction at the POS terminal, the registered commodity information corresponding to a commodity code registered by the POS terminal in the sales transaction;
after a request for a printed receipt, generate printing data for a transaction receipt for a completed sales transaction at the POS terminal based on stored information in the database for the sales transaction including the registered commodity information, then transmit the printing data to the POS terminal; and
after a request for an electronic receipt, generate electronic receipt cooperation data for the transaction receipt for the completed sales transaction at the POS terminal based on the stored information in the database for the sale transaction including the registered commodity information, then transmit the electronic receipt cooperation data to an electronic receipt system server.

2. The electronic receipt dispensing system according to claim 1, wherein the transaction system server is further configured to:
associate a transaction ID with the stored information for the sales transaction in the database.

3. The electronic receipt dispensing system according to claim 2, wherein the transaction system server is further configured to:
receive the request for the electronic receipt after previously receiving the request for the printed receipt and transmitting the printing data to the POS terminal, wherein
the request for the electronic receipt includes the transaction ID associated with the stored information for the sales transaction in the database.

4. The electronic receipt dispensing system according to any one of claims 1 to 3, wherein the request for the electronic receipt is sent from a terminal other than the POS terminal after completion of the sales transaction.

5. The electronic receipt dispensing system according to any one of claims 1 to 4, wherein
the stored information is stored as text data,
the printing data is generated from structured data obtained by converting the stored information to a structured data format, and
the electronic receipt cooperation data is generated from the structured data.

6. The electronic receipt dispensing system according to claim 5, wherein the stored information is stored in a JavaScript Object Notation format.

7. The electronic receipt dispensing system according to claim 5 or 6, wherein the structured data format is a HTML format.

8. A transaction system server for an electronic receipt dispensing system, transaction system server comprising:
a communication interface connectable to a point-of-sale terminal; and
a processor configured to:
store registered commodity information in a database for a sales transaction at the POS terminal, the registered commodity information corresponding to a commodity code registered by the POS terminal in the sales transaction;
after a request for a printed receipt, generate printing data for a transaction receipt for a completed sales transaction at the POS terminal based on stored information in the database for the sales transaction including the registered commodity information, then transmit the printing data to the POS terminal; and
after a request for an electronic receipt, generate electronic receipt cooperation data for the transaction receipt for the completed sales transaction at the POS terminal based on the stored information in the database for the sale transaction including the registered commodity information, then transmit the electronic receipt cooperation data to an electronic receipt system server.

9. The transaction system server according to claim 8, wherein
the stored information is stored as text data,
the printing data is generated from structured data obtained by converting the stored information to a structured data format, and
the electronic receipt cooperation data is generated from the structured data.

10. A electronic receipt dispensing method comprising:
storing registered commodity information in a database for a sales transaction at a POS terminal, the registered commodity information corresponding to a commodity code registered by the POS terminal in the sales transaction;
after a request for a printed receipt, generating printing data for a transaction receipt for a completed sales transaction at the POS terminal based on stored information in the database for the sales transaction including the registered commodity information, then transmit the printing data to the POS terminal; and
after a request for an electronic receipt, generating electronic receipt cooperation data for the transaction receipt for the completed sales transaction at the POS terminal based on the stored information in the database for the sale transaction including the registered commodity information, then transmit the electronic receipt cooperation data to an electronic receipt system server.

11. The electronic receipt dispensing method according to claim 10, further comprising:
associating a transaction ID with the stored information for the sales transaction in the database.

12. The electronic receipt dispensing method according to claim 11, further comprising:
receiving the request for the electronic receipt after previously receiving the request for the printed receipt and transmitting the printing data to the POS terminal, wherein
the request for the electronic receipt includes the transaction ID associated with the stored information for the sales transaction in the database.

13. The electronic receipt dispensing method according to any one of claims 10 to 12, wherein the request for the electronic receipt is sent from a terminal other than the POS terminal after completion of the sales transaction.

14. The electronic receipt dispensing method according to any one of claims 10 to 13, wherein
the stored information is stored as text data,
the printing data is generated from structured data obtained by converting the stored information to a structured data format, and
the electronic receipt cooperation data is generated from the structured data.

15. The electronic receipt dispensing method according to claim 14, wherein the stored information is stored in a JavaScript Object Notation format, and/or wherein the structured data format is a HTML format.
